# EUROPÄISCHE PATENTANMELDUNG

(11) **EP 2 650 585 A1**
(43) Veröffentlichungstag der Anmeldung: **16.10.2013**
(21) Anmeldenummer: 12163772.2
(22) Anmeldetag: 11.04.2012
(51) Int. Cl.: F17C 5/00, F17C 9/00, F17C 13/08

(54) **Druckspeicheranordnung**

(71) Anmelder: Magna Steyr Fahrzeugtechnik AG & Co KG, 8041 Graz (AT)
(72) Erfinder: Mayr, Franz, 8323 St. Marein bei Graz (AT)
(74) Vertreter: Rausch, Gabriele

(57) **Zusammenfassung**

Eine Druckspeicheranordnung (10) mit mindestens zwei Druckspeichern (11), wobei die mindestens zwei Druckspeicher (11) über eine Verbindungsvorrichtung (31) miteinander fluidleitend verbunden sind,
wobei die mindestens zwei Druckspeicher (11) jeweils an einem ersten und an einem zweiten Verbindungsabschnitt mit der Verbindungsvorrichtung (31) fluidleitend verbunden sind.

## Beschreibung

Die vorliegende Erfindung betrifft eine Druckspeicheranordnung mit mindestens zwei Druckspeichern, wobei die mindestens zwei Druckspeicher über eine Verbindungsvorrichtung miteinander fluidleitend verbunden sind.

Derartige Druckspeicher dienen der Aufnahme von druckbeaufschlagten Fluiden. Insbesondere werden Druckspeicher als Kraftstofftanks für Fahrzeuge eingesetzt und beinhalten dann Gase, wie zum Beispiel CNG, Mischgase oder Wasserstoff oder Flüssigkeiten, wie LPG oder LNG bei hohen Drücken. Die Druckspeicher werden meist als zylindrische Flaschen hergestellt. Es ist auch bekannt mehrere Druckspeicher in einem Modul zusammen zu fassen. Dadurch kann ein gemeinsamer Zugang zu mehreren Druckbehältern bereitgestellt werden.

Eine Kraftstoffbehälteranordnung zum Speichern druckbeaufschlagter Gase für ein Kraftfahrzeug mit mehreren einzelnen Kraftstoffbehältern mit jeweils einer endseitigen Öffnung zur Be- und Entleerung des Behälters, die des weiteren einen Sammler und ein Halteteil aufweist, wobei die Kraftstoffbehälter einerseits mit ihren Öffnungen an den Sammler und andererseits mechanischer an das Halteteil angeschlossen sind und somit die einzelnen Kraftstoffbehälter durch den Sammler und das Halteteil zu einer Einheit zusammen gehalten sind, ist aus der DE 20 2006 004 434 U1 bekannt.

Weiters ist aus der DE 102 06 502 C1 ein Druckgastanksystem bekannt, mit mindestens zwei im Wesentlichen gleichartigen Gasbehältern, wobei die Gasbehälter ein Bodenteil und ein Entnahmeteil und den Entnahmeteilen zugeordnete Öffnungen aufweisen. Den Entnahmeteilen ist ein Absperrventil zugeordnet, wobei die Entnahmeteile mit ihren Öffnungen in eine die Entnahmeteile miteinander verbindende Verbindungsschiene hineinragen. Die Öffnungen stehen mit einem in der Verbindungsschiene verlaufenden Gaskanal in Verbindung, wobei der Verbindungsschiene ein Absperrventil an einem Gaskanalausgang zugeordnet ist und dieses das allen Gasbehältern gemeinsame Absperrventil bildet.

Aus der DE 198 12 904 A1 ist schließlich eine Vorrichtung zum Speichern von Druckgas bekannt, mit einer Vielzahl von Speicherbehältern, wobei jeder Speicherbehälter ein Kopfstück aufweist, und die jeweiligen Kopfstücke modulartig miteinander verbunden oder verbindbar sind. Die Leitung des Druckgases aus den Speicherbehältern erfolgt über einen in den Kopfstücken vorgesehenen Strömungskanal, der über eine Bohrung mit dem Hohlraum der jeweiligen Speicherbehälter kommuniziert. Die Verbindung der einzelnen Kopfstücke erfolgt über Verbindungselemente, die in entsprechende Öffnungen in den Kopfstücken eingeführt werden.

Es ist eine Aufgabe der Erfindung, Druckspeicheranordnungen der genannten Art zu verbessern und insbesondere eine Druckspeicheranordnung mit hoher Flexibiltät des Aufbaus und vorteilhaften Bedingungen für eine Fluidbewegung innerhalb der Anordnung anzugeben.

Die Lösung der Aufgabe erfolgt durch eine Druckspeicheranordnung mit mindestens zwei Druckspeichern, wobei die mindestens zwei Druckspeicher über eine Verbindungsvorrichtung miteinander fluidleitend verbunden sind, wobei die mindestens zwei Druckspeicher jeweils an einem ersten und an einem zweiten Verbindungsabschnitt mit der Verbindungsvorrichtung fluidleitend verbunden sind.

Erfindungsgemäß sind also die Druckspeicher an mindestens zwei Anschlusspunkten, beispielsweise an gegenüberliegenden Enden zylindrischer Druckspeicher über die Verbindungsvorrichtung miteinander verbunden. Hierdurch werden verschiedenste Ausbildungen von Fluidströmungen innerhalb der Anordnung ermöglicht, insbesondere auch Kreisläufe, da gleichzeitig ein Zufluss von Fluid in einen Druckspeicher und ein Abfluss innerhalb der Druckspeicheranordnung stattfinden kann. Die Druckspeicher kommunizieren über einen getrennten zweiten Kanal, beispielsweise während deren Befüllung und während der Entnahme des Fluids. Unter anderem wird hierdurch auch ein vereinfachter Spülvorgang ermöglicht.

Ein Spülvorgang ist beispielsweise notwendig, wenn bei einer Endprüfung der Dichtheit der Gesamtanlage ein Prüffluid verwendet wird, welches nicht dem Medium entspricht, das in der eigentlichen Anwendung der Druckspeicher gespeichert wird, oder wenn aus Sicherheitsgründen für den Transport der Drucktankanordnung von einer Befüllung, mit beispielsweise Wasserstoff, Abstand genommen wird. Für Wasserstoff-Speicheranlagen werden üblicherweise Helium oder Stickstoff als Prüffluid verwendet, die aber im Einsatz im Fahrzeug eine Schädigung der Antriebseinheit verursachen können. Durch die genannte Verbindungsanordnung, die freie Kommunikation aller Komponenten und die Möglichkeit strömungsbeeinflussende Elemente, wie Querschnittreduktionen zu verbauen, kann bei der Inbetriebnahme im Fahrzeug ein Spülvorgang dargestellt werden, der Zeit, Energie und Ressourcen spart. Dies wird beispielsweise erreicht indem über eine Befüllventileinheit das endgültig zu speichernde Fluid eingebracht wird, während an einer Entnahmeventileinheit gezielt das Prüffluid abgelassen oder abgesaugt wird. Wenn mit der dem Gesamtvolumen der Anlage entsprechenden Menge gespült wurde, ist durch die gezielte Durchströmung aller Komponenten eine hohe Reinheit der Anlage erreicht. Ein großer Vorteil liegt darin, dass dies schon mit geringstem Druck erreicht wird. Es ist somit kein Befüllen mit Prüffluid unter Hochdruck, mit zeitaufwendigen Ablassen und zeitweiliger Wiederholung des Vorganges notwendig.

Weiterbildungen der Erfindung sind in den abhängigen Ansprüchen, der Beschreibung sowie den beigefügten Zeichnungen angegeben.

Vorzugsweise sind die ersten Verbindungsabschnitte der Druckspeicher mit einem ersten Verbindungselement der Verbindungsvorrichtung verbunden und die zweiten Verbindungsabschnitte der Druckspeicher mit einem zweiten Verbindungselement der Verbindungsvorrichtung verbunden, wobei das erste Verbindungselement und das zweite Verbindungselement ausschließlich über die Druckspeicher fluidleitend miteinander verbunden sind.

In dieser Anordnung wird die Verbindungsvorrichtung durch zwei voneinander getrennte Verbindungselemente gebildet, wobei das eine Verbindungselement die beiden ersten Abschnitte oder Enden der Druckspeicher miteinander verbindet und das zweite Verbindungselement die beiden zweiten Abschnitte oder Enden der Druckspeicher miteinander verbindet.

Weiters bevorzugt ist die Verbindungsvorrichtung mechanisch stabil ausgebildet. Wenn die Verbindungsvorrichtung aus Verbindungselementen zusammengesetzt ist, wie oben beschrieben, so sind bevorzugt die einzelnen Verbindungselemente mechanisch stabil ausgeführt. Auf diese Weise stellt die Verbindungsvorrichtung bzw. die Verbindungselemente einen stabilen Rahmen dar, der zur Aufnahme von Druckspeichern dient.

Insbesondere können die Verbindungselemente zusammen mit länglich geformten Druckspeichern, beispielsweise zylindrischen Druckspeichern, einen mechanisch stabilen Rahmen bilden, wobei die zwei einander gegenüberliegenden Enden der Druckspeicher jeweils fluidleitend mit dem jeweiligen Verbindungselement verbunden sind.

Weiters sind bevorzugt Befestigungspunkte für die Befestigung der Druckspeicheranordnung, insbesondere in einem Kraftfahrzeug, ausschließlich an der Verbindungsvorrichtung ausgebildet. Die Montage der gesamten Druckspeicheranordnung erfolgt dementsprechend über die Verbindungsvorrichtung. An den Befestigungspunkten, beispielsweise Aufhängungs- bzw. Montageaufnahmen der Verbindungsvorrichtung, können elastische Elemente, wie Gummilager, integriert sein. Durch diese ist eine Aufnahme von Längenänderungen und Lageänderungen der Druckspeicher gewährleistet. Dabei erfolgen Längenänderungen der Druckspeicher aufgrund des gleichzeitigen Druckaufbaus bzw. -abbaus durch die kommunizierenden Kanäle über die Verbindungsabschnitte und die Verbindungsvorrichtung in der Regel gleichmäßig, sodass die notwendigen Elastizitäten hierfür reduziert sind.

Gemäß einer weiteren bevorzugten Ausgestaltung der Erfindung sind Ventile und/oder Ventilblöcke und/oder Filter und/oder Absperrelemente und/oder Druckminderer und/oder Querschnittreduktionen, insbesondere eine Befüllventileinheit und/oder eine Entnahmeventileinheit, in oder an der Verbindungsvorrichtung angeordnet. Komponenten die der Beeinflussung der Fluidströmung dienen sind so in der Verbindungsvorrichtung angeordnet und können flexibel über die Verbindungsvorrichtung verteilt werden.

Gemäß einer Ausgestaltung der Erfindung sind die Druckspeicher untrennbar mit der Verbindungsvorrichtung verbunden, so dass eine Trennung eines Druckspeichers von der Verbindungsvorrichtung nur bei Zerstörung einer Versiegelung und/oder mit einem Spezialwerkzeug möglich ist. Hierdurch kann auch nachträglich sicher festgestellt werden, ob durch den Endkunden versucht wurde, die Verbindung zwischen einem Druckspeicher und der Verbindungsvorrichtung zu lösen. Ein Hantieren an der Verbindung soll hierdurch Fachpersonal bzw. Fachwerkstätten vorbehalten werden.

Gemäß einer Ausgestaltung der Erfindung sind die Druckspeicher über eine feste Schraubverbindung, insbesondere mittels einer Hohlschraube, mit der Verbindungsvorrichtung verbunden.

Bevorzugt ist zumindest ein Druckspeicher und die Verbindungsvorrichtung fluidleitend miteinander verbindbar, wobei der Druckspeicher an einem ersten Verbindungsabschnitt eine Querbohrung aufweist die eine axiale Bohrung des Druckspeichers schneidet, wobei die Querbohrung zur fluidleitenden Verbindung mit der Verbindungsvorrichtung eingerichtet ist. Im Druckspeicher ist eine axiale Bohrung in einem Verbindungsabschnitt vorgesehen. Die axiale Bohrung wird von einer Querbohrung geschnitten. Die Querbohrung steht bevorzugt normal auf die axiale Bohrung und ist somit parallel zur begrenzenden Wand des Druckspeichers im Verbindungsabschnitt angeordnet. Die Querbohrung kann daher einfach und zuverlässig an ebenfalls quer zu den Druckspeichern liegende Bohrungen einer Verbindungseinrichtung angeschlossen werden, insbesondere über eine Steckverbindung.

Unter dem Begriff "Bohrung" ist dabei im Rahmen der vorliegenden Schrift jede längliche Öffnung in einem umgebenden Körper zu verstehen. Das Herstellungsverfahren für die Öffnung ist hierdurch nicht festgelegt. Außer dem Herstellen der Öffnung durch Bohren sind also auch andere Verfahren mitumfasst, beispielsweise das Verformen eines Profils.

Vorzugsweise sind am ersten Verbindungsabschnitt des Druckspeichers beiderseits der Querbohrung Dichtringe zur Abdichtung zwischen Druckspeicher und Verbindungsvorrichtung eingerichtet.

Besonders bevorzugt ist der erste Verbindungsabschnitt des Druckspeichers über eine Steckverbindung bzw. Klemmverbindung bzw. Schnappverbindung mit der Verbindungsvorrichtung verbunden. Hierdurch ist eine schnelle Montage und je nach Ausführung auch schnelle Demontage des Druckspeichers ermöglicht. Hierzu kann zum Beispiel auch eine freistehende Aufnahme für ein Montage- bzw. Demontagewerkzeug oder eine Bohrung für die Demontage vorgesehen sein.

Bevorzugt ist die Steckverbindung als Federelement, insbesondere als Sicherungsring, Halbmond-Sicherungsring, Bolzen oder Schraube im Verbindungsabschnitt ausgebildet, die in einer Nut der Verbindungsvorrichtung zu liegen kommt.

Weiters ist bevorzugt ein axialer Bewegungsfreiraum für die Steckverbindung, insbesondere für das Federelement ausgebildet, insbesondere ein Bewegungsraum in einer Nut der Verbindungsvorrichtung. Dadurch wird der Steckverbindung bei Längenänderungen des Druckspeichers ein definiertes Spiel in der Nut ermöglicht.

Bevorzugt ist die Verbindungsvorrichtung in einem Fahrzeug montiert und dient der Lagerung der Druckspeicher. Die Verbindungsvorrichtung stellt also eine stabilen Rahmen dar, der in einem Fahrzeug vormontiert wird. In diesen Rahmen werden die einzelnen Druckspeicher eingesteckt, die sich entsprechend des vorgegebenen Bewegungsspielraumes im Rahmen bewegen können.

Nach einer Ausgestaltung der Erfindung ist der erste Verbindungsabschnitt des Druckspeichers über eine Schraubverbindung mit der Verbindungsvorrichtung verbunden. Insbesondere dienen hierzu eine Schraube eine Schraubenmutter und / oder ein Splint.

Vorzugsweise ist in der axialen Bohrung des Druckspeichers eine Druckspeicherkomponente, insbesondere ein Ventil, angeordnet.

Besonders bevorzugt weist die Verbindungsvorrichtung im Bereich der axialen Bohrung des Druckspeichers eine Öffnung auf. Hierdurch ist insbesondere eine in der axialen Bohrung angeordnete Druckspeicherkomponente von außen gut zugänglich.

Besonders bevorzugt ist weiters die Öffnung mit einer Abdeckung abdeckbar, wobei die Abdeckung insbesondere als Indikator für den Dichtheitszustand des Druckspeichers ausgebildet sein kann. Die Abdeckung verhindert das Eindringen von Verschmutzungen in die Öffnung. Weiters kann die Abdeckung so ausgeführt sein, dass eine zerstörungsfreie Demontage des Druckspeichers nicht ermöglicht wird und/oder ein unbefugter Zugriff ersichtlich ist. Weiters kann die Abdeckung so ausgeführt sein, dass bei einem Dichtungsschaden die Abdeckung beispielsweise nach außen gewölbt wird oder reißt und so der Dichtungsschaden rechtzeitig erkannt werden kann.

Gemäß einer Ausgestaltung der Erfindung weist der Druckspeicher im ersten Verbindungsabschnitt eine Sollbruchstelle auf, wobei insbesondere im Druckspeicher auch ein Durchflussbegrenzer angeordnet ist und die Sollbruchstelle zum Durchflussbegrenzer so angeordnet ist, dass der Durchflussbegrenzer bei Bruch an der Sollbruchstelle im Druckspeicher verbleibt.

Besonders bevorzugt weist der Druckspeicher einen zweiten Verbindungsabschnitt auf, der zur fluidleitenden Verbindung mit der Verbindungsvorrichtung eingerichtet ist, wobei der zweite Verbindungsabschnitt insbesondere gleich aufgebaut ist, wie der erste Verbindungsabschnitt. Der Druckspeicher ist so an zwei Abschnitten, insbesondere an beiden Enden eines zylindrischen Druckspeichers über eine erfindungsgemäße Verbindung mit der Verbindungsvorrichtung verbindbar.

Die Erfindung wird im Folgenden beispielhaft unter Bezugnahme auf die Zeichnungen beschrieben.
- Fig. 1a: ist eine schematische Darstellung einer Druckspeicheranordnung von vorne.
- Fig. 1b: ist eine schematische Darstellung einer Druckspeicheranordnung von oben.
- Fig. 2a: ist eine schematische Darstellung einer weiteren Druckspeicheranordnung von vorne.
- Fig. 2b: ist eine schematische Darstellung einer weiteren Druckspeicheranordnung von oben.
- Fig. 3 bis Fig. 7: sind schematische Darstellungen verschiedener Ausbildungen der Verbindung zwischen Druckspeicher und Verbindungsvorrichtung von vorne.
- Fig. 8: ist eine schematische Darstellung einer Ausbildung einer Verbindung zwischen Druckspeicher und Verbindungsvorrichtung von oben.
- Fig. 9: ist eine schematische Darstellung einer weiteren Ausbildung einer Verbindung zwischen Druckspeicher und Verbindungsvorrichtung von oben.

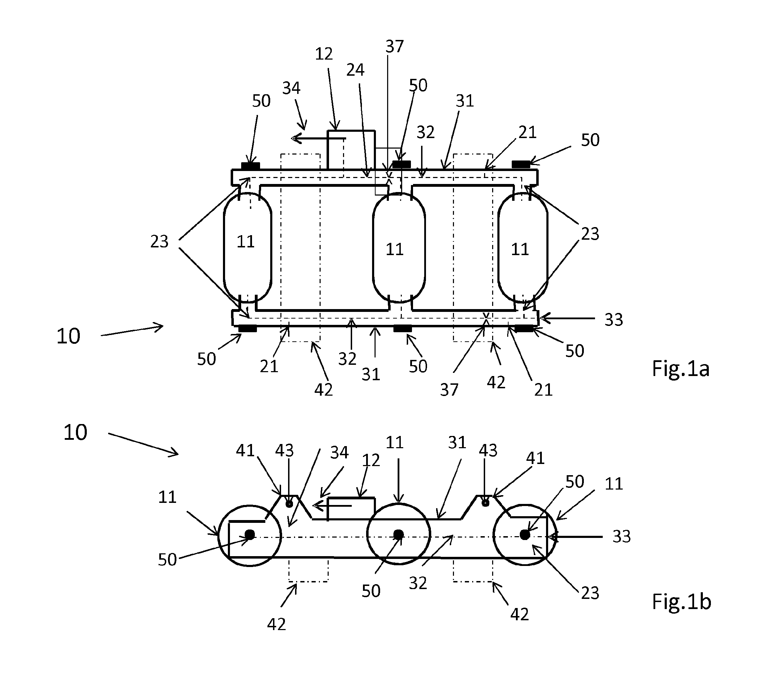

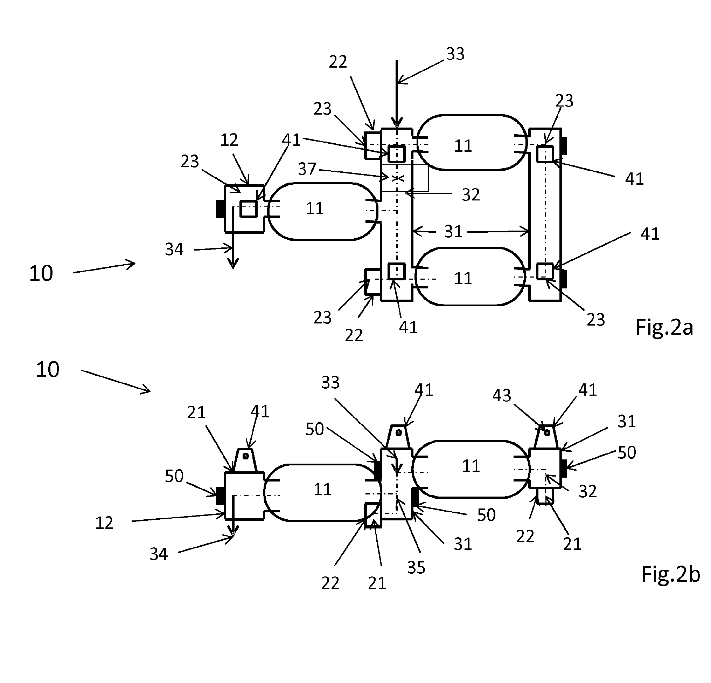

In den Fig. 1a bis 2b sind schematische Darstellungen verschiedener erfindungsgemäßer Druckspeicheranordnungen dargestellt.

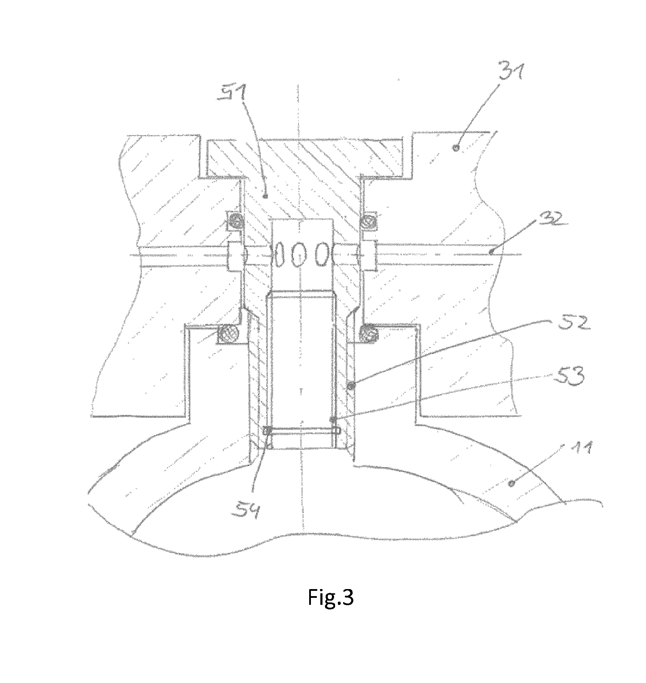

Die Druckspeicheranordnung 10 umfasst zylindrische Druckspeicher 11, die an ihren beiden Enden mit Verbindungselementen einer Verbindungsvorrichtung 31 dauerhaft verbunden sind. Das druckbeaufschlagte Fluid strömt aus den Druckspeichern 11 durch Bohrungen 32 der Verbindungselemente. Die Verbindungsvorrichtung 31 ist mechanisch stabil ausgebildet und an Befestigungspunkten 41,42 hängend oder stehend, beispielsweise in einem Fahrzeug, befestigt. Die Druckspeicher 11 sind über Schraubverbindungen 50 mit der Verbindungsvorrichtung 31 verbunden. In bzw. an der Verbindungsvorrichtung 31 ist ein temperaturgesteuerter Druckminderer 21, ein automatisches Zylinderventil 23 und ein Wartungsventil 24 integriert, ebenso wie Ventilblöcke 12 und 22. Die Montage von Ventilen, Ventilblöcken und dergleichen kann an beliebiger Stelle in bzw. an der Verbindungsvorrichtung 31 erfolgen. Weiters sind in der Verbindungsvorrichtung 31 Querschnittreduktionen 37 angeordnet. Durch die beliebige Anordnung der genannten Komponenten in der Verbindungsvorrichtung und die freie Kommunikation der Druckspeicher 11 über die Verbindungsvorrichtung 31 ist eine gezielte Lenkung des Strömungskreislaufs im Gesamtsystem möglich. Vor allem durch die beliebige Anordnung der Befüllventileinheit 33 und der Entnahmeventileinheit 34 in der Druckspeicheranordnung 10 ist somit ein einfaches Spülen der Gesamtanlage bei der Inbetriebnahme ermöglicht. Eine mechanisch feste Verbindung zwischen den Druckspeichern 11 und der Verbindungsvorrichtung 31 erfolgt beispielsweise mittels Schraubverbindung 50 und ist in Fig. 3 näher dargestellt.

Fig. 3 ist eine schematische Darstellung einer Verbindung zwischen Druckspeichern 11 und Verbindungsvorrichtung 31. Zur Verbindung wird eine Hohlschraube 51 verwendet, die über ein Außengewinde 52 am Druckspeicher 11 befestigt ist. Das Innengewinde 53 der Hohlschraube 51 dient der Aufnahme von zylindernahen Ventilen und/oder Filtern. Es sind aber auch andere Befestigungsarten möglich. So können die zylindernahen Ventile und / oder Filter beispielsweise über Einstiche 54 der Hohlschraube 51 mittels Sicherungsring fixiert werden.

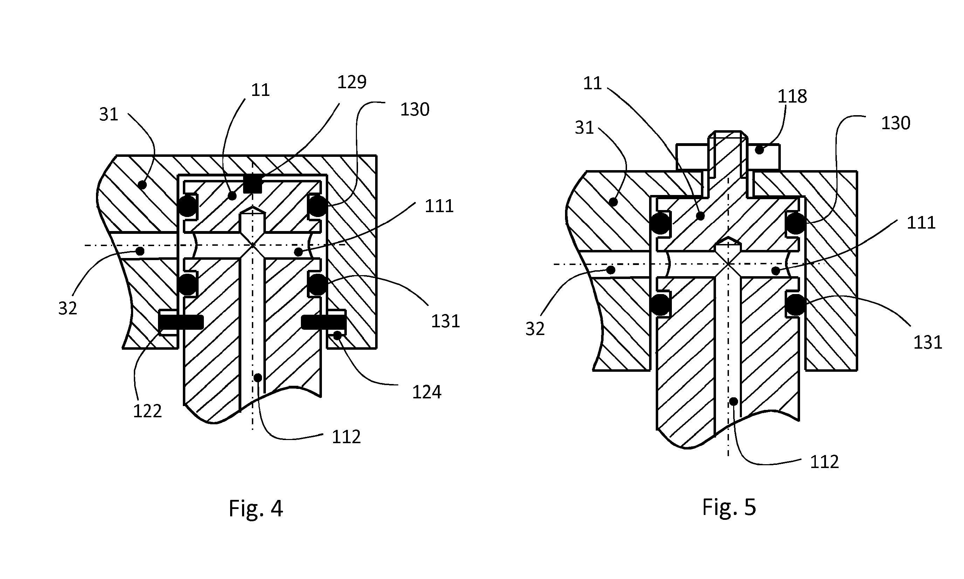

Die Fig. 4 bis Fig. 7 sind schematische Darstellungen weiterer Ausbildungen der Verbindung zwischen Druckspeicher und Verbindungsvorrichtung von vorne.

In Fig. 4 ist die Verbindung zwischen dem Druckspeicher 11 bzw. einem Verbindungsabschnitt des Druckspeichers 11 und der Verbindungsvorrichtung 31 bzw. einem Anschlussblock der Verbindungsvorrichtung 31 als Klemmverbindung bzw. Steckverbindung ausgeführt. Die Klemmung erfolgt mittels eines Klemmverbindungselementes 122 welches als Halbmond-Sicherungsring ausgeführt ist und welches in einer Nut der Verbindungsvorrichtung 31 festgelegt ist. Dabei weist die Nut in axialer Richtung einen Bewegungsfreiraum 124 für den Sicherungsring auf. Im Verbindungsabschnitt des Druckspeichers 11 führt eine axiale Bohrung 112 aus dem Innenraum des Druckspeichers 11 in Richtung einer äußeren Begrenzung des Verbindungsabschnittes des Druckspeichers 11. Diese axiale Bohrung 112 wird von einer Querbohrung 111 geschnitten, so dass ein Fluidstrom von der axialen Bohrung 112 über die Querbohrung 111 weitergeführt werden kann. Die Querbohrung 111 reicht bis ans Ende des Verbindungsabschnittes des Druckspeichers 11, so dass über die Querbohrung 111 eine Verbindung zwischen dem Innenraum des Druckspeichers 11 und der Umgebung des Druckspeichers 11 hergestellt ist und so Fluid über die Querbohrung 111 in den Druckspeicher 11 gelangen kann und aus diesem austreten kann. Die Querbohrung 111 ist so ausgerichtet, dass sie in die Bohrung 32 der Verbindungsvorrichtung einmündet. Diese Ausrichtung der Bohrungen 111 und 32 zueinander wird besonders durch die Steckverbindung, im Gegensatz insbesondere zu Schraubverbindungen, erleichtert. Weiters wird über die Zentrierung 129, beispielsweise einen Zentrierbolzen, die radiale Ausrichtung des Druckspeichers 11 sichergestellt. Beiderseits der Querbohrung 111 sind zwischen dem Verbindungsabschnitt des Druckspeichers 11 und dem Anschlussblock der Verbindungsvorrichtung 31 Dichtringe 130 bzw. 131 angeordnet.

In der Ausführung gemäß Fig. 5 ist die Verbindung zwischen dem Druckspeicher 11 und der Verbindungsvorrichtung 31 über eine Mutter 118 gesichert.

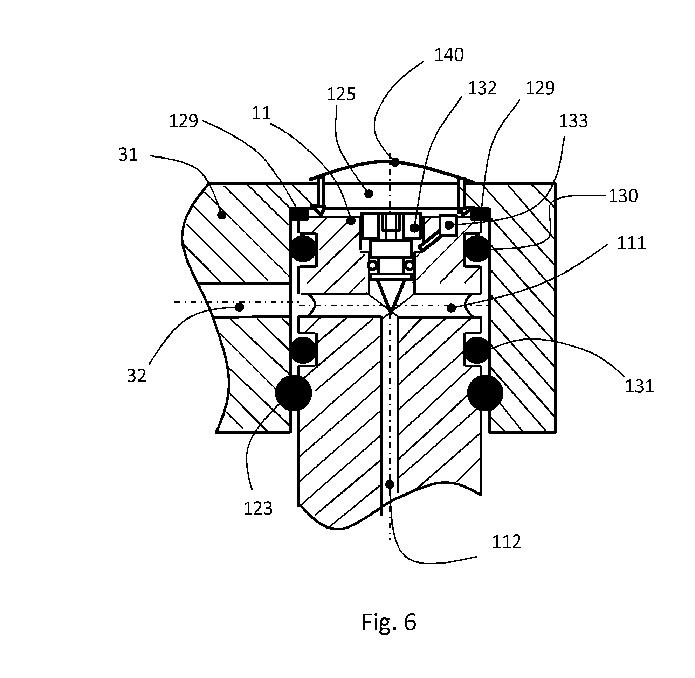

In der Ausführung gemäß Fig. 6 ist die Verbindung zwischen dem Druckspeicher 11 und der Verbindungsvorrichtung 31 über ein Schraubverbindungselement 123 hergestellt, jedoch könnte die Verbindung auch als Steckverbindung ausgeführt sein. Die Verbindung verwendet ebenfalls Zentrierungen 129. In dieser Ausführungsform ist die axiale Bohrung 112 durchgehend, als durchgängige Öffnung, ausgeführt. Weiters weist auch die Verbindungsvorrichtung 31 im Bereich des offenen Endes der axialen Bohrung 112 eine Öffnung 125 auf, sodass Komponenten wie zum Beispiel ein manuelles Ventil in die Öffnung eingeschraubt oder eingesteckt werden können. In der Öffnung der axialen Bohrung 112 befindet sich eine Schraube 132, die in planer Stellung zum Druckspeicher 11 die Öffnung nach außen abdichtet und die Bohrungen 111, 112 freigibt, bzw. in voll eingeschraubtem Zustand die axiale Bohrung 112 gegen die Querbohrung 111 abdichtet. In einem definierten Zustand der Schraube 132 gibt diese eine zusätzliche Öffnung 133 nach außen frei. Die zusätzliche Öffnung 133 ist so ausgebildet, dass zum Beispiel eine Serviceleitung eingeschraubt werden kann. Die Öffnung 125 ist über eine Abdeckung 140 aus Kunststoff oder Blech abdeckbar, die so ausgeführt ist, dass sie bei einem Schaden der Dichtung, insbesondere des Dichtringes 130, nach außen gewölbt wird oder reißt. Die Abdeckung 140 ist ferner so ausgeführt, dass eine zerstörungsfreie Demontage nicht möglich ist und somit ein unbefugter Zugriff verhindert wird oder ersichtlich ist.

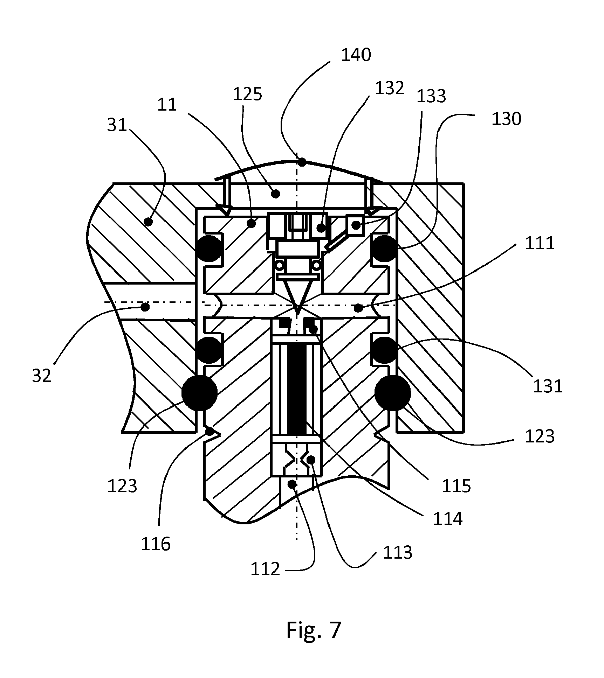

In der Ausführung gem. Fig. 7 weist der Verbindungsabschnitt des Druckspeichers 11 zusätzlich eine Sollbruchstelle 116 und einen Durchflussbegrenzer 113 auf, die so angeordnet sind, dass der Durchflussbegrenzer 113 bei Bruch an der Sollbruchstelle 116 im Druckspeicher 11 verbleibt. Die axiale Bohrung 112 ist so ausgeführt, dass ein Durchflussbegrenzer 113 und / oder ein Filter 114 und / oder ein Dichtsitz 115 eingeschraubt oder eingesteckt werden kann.

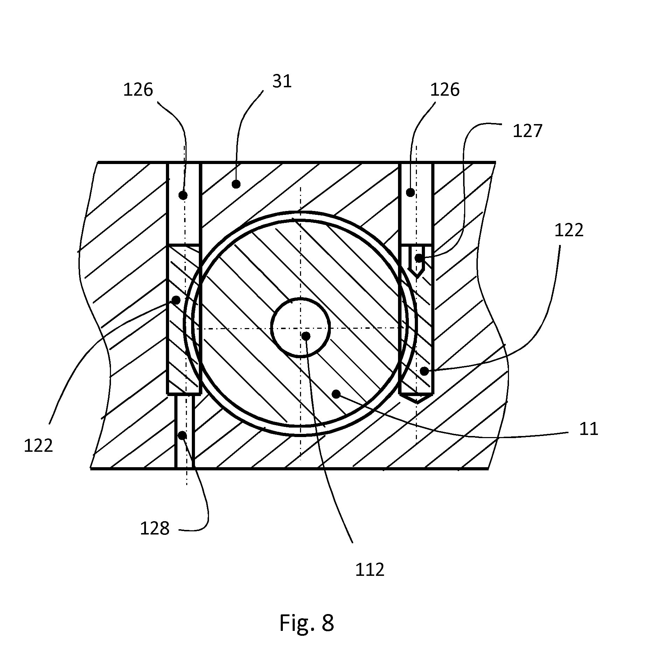

Fig. 8 zeigt eine schematische Darstellung einer Ausbildung der Verbindung zwischen Druckspeicher und Verbindungsvorrichtung von oben. Dabei sind als Klemmverbindungselemente 122 Bolzen in zur Nut des Druckspeichers 11 überschneidenden Bohrungen 126 angeordnet. Die Ausführung ist so angelegt, dass mittels der freistehenden Aufnahme 127 für das Montage- bzw. Demontagewerkzeug und die Bohrung 128 eine Schnellmontage bzw. Schnelldemontage ermöglicht wird.

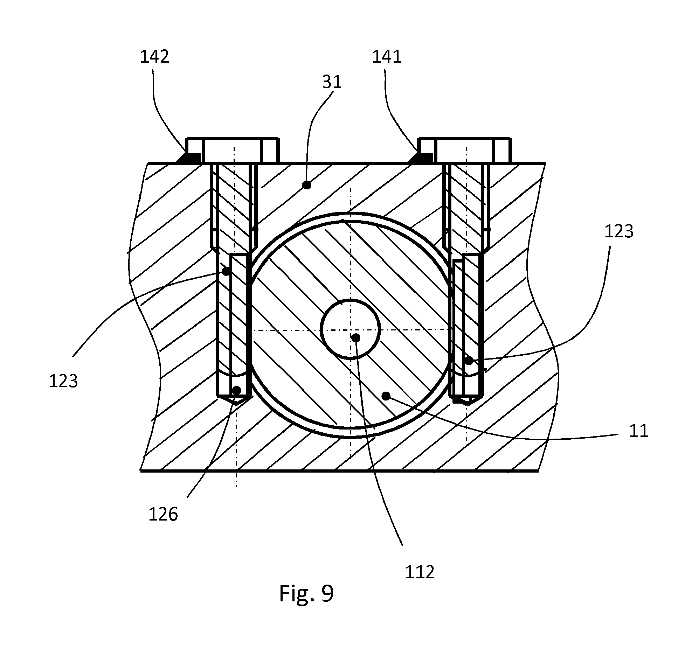

Fig. 9 zeigt eine schematische Darstellung einer weiteren Ausbildung der Verbindung zwischen Druckspeicher 11 und Verbindungsvorrichtung 31 von oben. Hierbei werden als Schraubverbindungselemente 123 Schrauben eingesetzt, deren Gewinde nur entlang eines Teiles der Schraubenlänge ausgeführt ist. Das vordere Teil der Verbindungselemente 123, welches den Halt des Druckspeichers 11 an der Verbindungsvorrichtung 31 sicher stellt, ist als gewindefreier Bolzen ausgeführt. Dadurch ist bei entsprechender Dimensionierung der Nut ein Bewegungsfreiraum für das Verbindungselement 123 sicher gestellt und so ein Spiel für die in der Verbindungsvorrichtung 31 gelagerten Druckspeicher 11 ermöglicht. An den Schraubverbindungselementen 123 sind Versiegelungen 141, 142 ersichtlich. Diese Versiegelungen können beispielsweise durch Lack oder Schweißpunkte bereitgestellt werden.

Die Erfindung offenbart somit eine Druckspeicheranordnung mit hoher Flexibiltät des Aufbaus und vorteilhaften Bedingungen für eine Fluidbewegung innerhalb der Anordnung.

### Bezugszeichenliste

- 10: Druckspeicheranordnung
- 11: Druckspeicher
- 12: Ventilblock
- 21: Druckminderer
- 22: Ventilblock
- 23: Zylinderventil
- 24: Wartungsventil
- 31: Verbindungsvorrichtung
- 32: Bohrung
- 33: Befüllventileinheit
- 34: Entnahmeventileinheit
- 37: Querschnittreduktionen
- 41: Befestigungspunkt hängende Ausführung
- 42: Befestigungspunkt stehende Ausführung
- 43: Gummilager
- 50: Schraubverbindung
- 51: Hohlschraube
- 52: Außengewinde
- 53: Innengewinde
- 54: Inneneinstich
- 111: Querbohrung
- 112: axiale Bohrung
- 113: Durchflussbegrenzer
- 114: Filter
- 115: Dichtsitz
- 116: Sollbruchstelle
- 118: Mutter
- 122: Klemmverbindungselement
- 123: Schraubverbindungselement
- 124: Bewegungsfreiraum
- 125: Öffnung
- 126: Bohrung
- 127: freistehende Aufnahme
- 128: Bohrung
- 129: Zentrierung
- 130: Dichtring
- 131: Dichtring
- 132: Schraube
- 133: Öffnung
- 140: Abdeckung
- 141: Versiegelung
- 142: Versiegelung

## Patentansprüche

1. Druckspeicheranordnung (10) mit mindestens zwei Druckspeichern (11), wobei die mindestens zwei Druckspeicher (11) über eine Verbindungsvorrichtung (31) miteinander fluidleitend verbunden sind, **dadurch gekennzeichnet, dass** die mindestens zwei Druckspeicher (11) jeweils an einem ersten und an einem zweiten Verbindungsabschnitt mit der Verbindungsvorrichtung (31) fluidleitend verbunden sind.

2. Druckspeicheranordnung nach Anspruch 1,
**dadurch gekennzeichnet, dass** die ersten Verbindungsabschnitte der Druckspeicher (11) mit einem ersten Verbindungselement der Verbindungsvorrichtung (31) verbunden sind und die zweiten Verbindungsabschnitte der Druckspeicher (11) mit einem zweiten Verbindungselement der Verbindungsvorrichtung (31) verbunden sind, wobei das erste Verbindungselement und das zweite Verbindungselement ausschließlich über die Druckspeicher (11) fluidleitend miteinander verbunden sind.

3. Druckspeicheranordnung nach Anspruch 1 oder 2,
**dadurch gekennzeichnet, dass** die Verbindungsvorrichtung (31) mechanisch stabil ausgebildet ist.

4. Druckspeicheranordnung nach Anspruch 2,
**dadurch gekennzeichnet, dass** die Verbindungselemente zusammen mit länglich geformten Druckspeichern (11) einen mechanisch stabilen Rahmen bilden, wobei die zwei einander gegenüberliegenden Enden der Druckspeicher (11) jeweils fluidleitend mit dem jeweiligen Verbindungselement verbunden sind.

5. Druckspeicheranordnung nach einem der vorhergehenden Ansprüche,
**dadurch gekennzeichnet, dass** Befestigungspunkte (41, 42) für die Befestigung der Druckspeicheranordnung, insbesondere in einem Kraftfahrzeug, ausschließlich an der Verbindungsvorrichtung (31) ausgebildet sind.

6. Druckspeicheranordnung nach einem der vorhergehenden Ansprüche,
**dadurch gekennzeichnet, dass** Ventile (23, 24) und/oder Ventilblöcke (12, 22) und/oder Filter und/oder Absperrelemente und/oder Druckminderer (21) und/oder Querschnittreduktionen (37), insbesondere eine Befüllventileinheit (33) und/oder eine Entnahmeventileinheit (34), in oder an der Verbindungsvorrichtung (31) angeordnet sind.

7. Druckspeicheranordnung nach einem der vorhergehenden Ansprüche,
**dadurch gekennzeichnet, dass** die Druckspeicher (11) untrennbar mit der Verbindungsvorrichtung (31) verbunden sind, so dass eine Trennung eines Druckspeichers (11) von der Verbindungsvorrichtung (31) nur bei Zerstörung einer Versiegelung und/oder mit einem Spezialwerkzeug möglich ist.

8. Druckspeicheranordnung nach einem der vorhergehenden Ansprüche,
**dadurch gekennzeichnet, dass** die Druckspeicher (11) über eine feste Schraubverbindung (50), insbesondere mittels einer Hohlschraube (51), mit der Verbindungsvorrichtung (31) verbunden sind.

9. Druckspeicheranordnung nach einem der vorhergehenden Ansprüche,
**dadurch gekennzeichnet, dass** zumindest einer der Druckspeicher (11) am ersten Verbindungsabschnitt eine Querbohrung (111) aufweist die eine axiale Bohrung (112) des Druckspeichers (11) schneidet, wobei die Querbohrung (111) zur fluidleitenden Verbindung mit der Verbindungsvorrichtung (31) eingerichtet ist.

10. Druckspeicheranordnung nach einem der vorhergehenden Ansprüche,
**dadurch gekennzeichnet, dass** am ersten Verbindungsabschnitt des Druckspeichers (11) beiderseits der Querbohrung (111) Dichtringe (130, 131) zur Abdichtung zwischen Druckspeicher (11) und Verbindungsvorrichtung (31) eingerichtet sind.

11. Druckspeicheranordnung nach einem der vorhergehenden Ansprüche,
**dadurch gekennzeichnet, dass** der erste Verbindungsabschnitt des Druckspeichers (11) über eine Steckverbindung bzw. Klemmverbindung (122) mit der Verbindungsvorrichtung (31) verbunden ist.

12. Druckspeicheranordnung nach Anspruch 11,
**dadurch gekennzeichnet, dass** die Steckverbindung bzw. Klemmverbindung (122) als Federelement, insbesondere als Sicherungsring, Halbmond-Sicherungsring, Bolzen oder Schraube im Verbindungsabschnitt ausgebildet ist, der in einer Nut der Verbindungsvorrichtung (31) zu liegen kommt.

13. Druckspeicheranordnung nach einem der vorhergehenden Ansprüche,
**dadurch gekennzeichnet, dass** in der axialen Bohrung (112) des Druckspeichers (11) eine Druckspeicherkomponente, insbesondere ein Ventil, angeordnet ist.

14. Druckspeicheranordnung nach einem der vorhergehenden Ansprüche,
**dadurch gekennzeichnet, dass** die Verbindungsvorrichtung (3 1) im Bereich der axialen Bohrung (112) des Druckspeichers (11) eine Öffnung (125) aufweist.

15. Druckspeicheranordnung nach einem der vorhergehenden Ansprüche,
**dadurch gekennzeichnet, dass** der Druckspeicher (11) im ersten Verbindungsabschnitt eine Sollbruchstelle (116) aufweist, wobei insbesondere im Druckspeicher (11) auch ein Durchflussbegrenzer (113) angeordnet ist und die Sollbruchstelle (116) zum Durchflussbegrenzer (113) so angeordnet ist, dass der Durchflussbegrenzer (113) bei Bruch an der Sollbruchstelle (116) im Druckspeicher (11) verbleibt.

16. Druckspeicheranordnung nach Anspruch 8,
**dadurch gekennzeichnet, dass** der Bereich zwischen dem Außenumfang der festen Schraubverbindung (50), insbesondere der Hohlschraube (51), und der Verbindungsvorrichtung (31) und / oder dem Druckspeicher (11) durch Dichtelemente, insbesondere durch Dichtringe, abgedichtet ist.

17. Druckspeicheranordnung nach Anspruch 16,
**dadurch gekennzeichnet, dass** die feste Schraubverbindung (50), insbesondere die Hohlschraube (51), zwischen zwei Dichtelementen eine Querbohrung aufweist, die mit einer Bohrung der Verbindungsvorrichtung fluidleitend verbunden ist.

18. Druckspeicheranordnung nach Anspruch 16 oder 17,
**dadurch gekennzeichnet, dass** in der festen Schraubverbindung (50), insbesondere in der Hohlschraube (51), Ventile (113) und/oder Filter (114) und/oder Sensoren angeordnet sind.

19. Druckspeicheranordnung nach einem der vorhergehenden Ansprüche,
**dadurch gekennzeichnet, dass** die Verbindungsvorrichtung (31) in einem Fahrzeug montiert ist und zur Lagerung der Druckspeicher (11) ausgebildet ist.
